# EUROPEAN PATENT SPECIFICATION

(11) **EP 4 140 922 B1**
(45) Date of publication and mention of the grant of the patent: **03.01.2024**
(21) Application number: 21192902.1
(22) Date of filing: 24.08.2021
(51) Int. Cl.: B65G 41/00, B65G 21/12, B07B 1/00

(54) **MOBILE AGGREGATE PROCESSING APPARATUS**
MOBILE AGGREGATVERARBEITUNGSVORRICHTUNG
APPAREIL DE TRAITEMENT D'AGRÉGAT MOBILE

(43) Date of publication of application: 01.03.2023
(73) Proprietor: Portafill International Limited, Omagh Tyrone BT79 9JR (GB)
(72) Inventor: RAFFERTY, Malachy James, Omagh, BT79 9JR (GB)
(74) Representative: Murgitroyd & Company

(56) References cited:
- EP-A1- 2 883 624
- EP-A1- 2 894 116
- EP-A1- 3 747 555
- CN-U- 204 297 584
- GB-A- 2 468 966
- US-A1- 2008 105 520

## Description

### FIELD OF THE INVENTION

The present invention relates to a mobile aggregate processing apparatus, particularly mobile aggregate processing apparatuses for processing aggregate material, and especially mobile aggregate processing apparatuses with conveyors for use on the mobile aggregate processing apparatus.

### BACKGROUND

Conveyors are commonly provided on mobile aggregate processing apparatuses and the likes, such as stockpilers, rock crusher, grading screens and industrial shredders. There are various types of conveyors with different functions and design requirements. For example, 'transfer conveyors' are used to transfer aggregate material between conveyors; 'collection conveyors' generally collect and transfer aggregate material to a secondary conveyor; 'stockpiling conveyors' are often inclined and are used to stockpile the aggregate material as it exits the mobile aggregate processing apparatus. For the purpose of this document the collection and transfer conveyor may be referred to as the first or primary conveyor, and the stockpiling conveyor may be referred to as the second or incline conveyor, this terminology used, is not to be limiting but to aid understanding only.

Typically, mobile aggregate processing apparatuses, such as those mentioned previously, include one or more conveyors to collect, transfer and stockpile the processed aggregate materials. It is also known that two or more of these conveyors may operate in sequence, for example to move aggregate material and this may include raising the aggregate material in order to stock pile or store it in a particular location. The point at which the aggregate material pass from one conveyor to another conveyor is referred to as the 'transfer point'.

In an example, a mobile processing apparatus can have two conveyors, a first or primary conveyor which is relatively horizontal for moving processed aggregate material from the processing point to a second conveyor, which is capable of being inclined to raise the processed aggregate material before discharging it at another location, possibly in a container for transportation. If the two conveyors are not attached, careful setting up is required to ensure the processed aggregate material is transferred. Ideally the second conveyor is attached by some means to the main body of the mobile aggregate processing apparatus. In these examples the second conveyor is ideally hinged, or pivotally attached, to the chassis of the mobile aggregate processing apparatus to enable the second conveyor to be inclined at various angles and also for storage when transporting, for example.

Some conveyors, such as stockpiling conveyor may be folded and unfolded to facilitate transportation. Foldable conveyors are typically hinged to the chassis of the mobile aggregate processing apparatus and consist of one or more folding sections connected together via a linkage and powered via one or more hydraulically operated actuators. The folding is typically across the longitudinal length of the conveyor. The conveyor belt may need slacking off before folding and then tightening again when ready you use in an extended position.

Inclining, declining, folding and unfolding conveyors for transportation can be problematic due to space constraints, geometry, and design limitations. Typically the first or primary conveyor that is positioned, for example, to first receive the processed aggregate material is held fixed to the chassis in order to withstand the force of receiving the processed aggregate material. It may be impossible to move the position of the first or primary conveyor in relation to the chassis of the mobile aggregate processing apparatus and therefore it is the second conveyor that is required to be carefully positioned each time setting up.

Where it is possible to adjust the first or primary conveyor, it is still difficult or impractical to adjust or reposition and often extremely limited in possibilities of adjustment or reposition.

Currently it is difficult, time consuming and in certain situation impractical, to adjust or reposition the conveyors in relationship to each other, in particular the primary conveyor. This in turn increases the degree of complexity as well as increase the possibility of damaging the apparatus due to human error, or losing processed aggregate off the conveyors. There may also be an increased risk to the user. To avoid having to move, adjust or reposition the primary conveyor, compromises are often made to the current designs which result in a transfer point that is less efficient at controlling the flow of aggregate. This may result in loss of processed aggregate from the conveyors and more down time for repairs or collecting processed aggregate that fell off prematurely from the conveyors.

Conveyors, for example, the second or incline conveyor, can be adjusted to vary a conveyor's inclination for various reasons. For example, 'material rollback' or "aggregate rollback", is practically common on conveyors with steep incline angles. In certain applications material rollback, also referred as 'material slip', occurs when the conveyed material rolls back on itself due to its size, shape, and composition. This can cause safety concerns, blockages, and material spillages. As a solution, the industry often utilises stockpiling conveyors with an adjustable inclination, allowing the operator to set the conveyor at an angle that will reduce the risk of material rollback. "Aggregate material" is also simply known as "aggregate".

Moving or adjusting a conveyor inclination will change the infeed end position relative to the discharge end on the primary conveyor. This in turn will adversely affect the flow of material or aggregate at the transfer point. Increasing the likelihood of experiencing certain issues such as material spillages, blockages, increased levels of dust and excessive wear. This may require even further repositioning of one or more of the conveyors to achieve a more optimal efficient position before processing.

GB 2468966 A discloses a mobile aggregate processing apparatus comprising:a chassis, a first conveyor, wherein the first conveyor is slidably mounted, between a first position and second position, to the chassis, a slider-crank linkage, wherein the slider-crank linkage connects, directly or indirectly, the first conveyor and second conveyor sections. GB 2468966 A discloses in particular a second conveyor portion acting as a discharge end which is deployed into operation by means of hydraulic cylinders unfolding the two conveyor sections of the discharge conveyor.

US 2008/105520 A1 discloses a method of re-positioning a first conveyor relative to a second conveyor in a mobile processing apparatus having a first and a second conveyor, wherein the first conveyor is slidably mounted, between a first position and a second position, to the chassis of the mobile aggregate processing apparatus and the second conveyor comprises an incline conveyor able to rotate about an axis relative to the chassis, comprising the steps of:providing a slider-crank linkage between the first conveyor and the second conveyor; operating the slider-crank linkage to change the angle between the first conveyor and the second conveyor. This document discloses in particular a slider-crank mechanism for use in agricultural mixers for mixing hay and silage with other nutrients including animal feed supplements and grains and mounted on an undercarriage to be powered and pulled by a tractor.

### SUMMARY OF THE INVENTION

The present invention aims to provide an improved mobile aggregate processing apparatus.

There is provided a mobile aggregate processing apparatus comprising:
- a chassis; and,
- a first conveyor, wherein the first conveyor is slidably mounted, between a first position and second position, to the chassis.

According to the present invention there is provided a mobile aggregate processing apparatus comprising:
- a chassis;
- a first conveyor, wherein the first conveyor is slidably mounted, between a first position and second position, to the chassis
- a second conveyor, wherein the second conveyor is pivotally mounted to the chassis, and wherein the second conveyor comprises an incline conveyor able to rotate about an axis relative to the chassis; and,
- a slider-crank linkage, wherein the slider-crank linkage connects, directly or indirectly, the first conveyor and second conveyor.

In some embodiments the first conveyor comprises a frame. In some embodiments the first conveyor, or the frame of the first conveyor, is slidably mounted to the chassis, and configured to enable the first conveyor to slide back and forth along the longitudinal direction of the first conveyor. In particular embodiments the first conveyor, or a frame of the first conveyor, is slidably mounted, to the chassis, between a first point and a second point, relative to the chassis.

Advantageously this enables easy positioning of the first conveyor relative to the chassis of the mobile aggregate processing apparatus but also relatively to any second conveyor.

Conveyors are known to those skilled in the art. Typically a conveyor, including conveyors of some embodiments of the present invention comprises an endless conveyor belt wrapped around at least two pulleys wherein the pulleys are mounted on a frame.

In some embodiments the chassis comprises one or more support guides configured to mount the first conveyor, or the frame of the first conveyor, and to enable the first conveyor to slide relative to the chassis. In some embodiments the chassis comprising one or more support guides configured to enable the first conveyor to slide relative to the chassis, back and forth along the direction of the longitudinal length of the conveyor. In some embodiments the frame of the first conveyor is mounted on one or more support guides of the chassis.

In particular embodiments the mobile processing apparatus comprises one or more support guides configured to mount, the first conveyor, or a frame of the first conveyor; to the chassis; and enable the first conveyor to slide relative to the chassis, along the direction of longitudinal length of the conveyor.

In particular embodiments the support guide comprise one or more of: tracks, rails, wheels, skids, or sliding pads. Advantageously the support guide, or guides, supports the frame of the first conveyor slidably mounted on the chassis and may enable an easy sliding movement by reducing friction, but may also still retain or hold, support, the primary conveyor.

In some embodiments the mobile aggregate processing apparatus further comprises a second conveyor. In some embodiments the mobile aggregate processing apparatus comprises a second conveyor that is pivotally mounted to the chassis. In particular embodiments, the mobile processing apparatus comprises a second conveyor, wherein the second conveyor comprises a frame and the fame of the second conveyor is pivotally mounted to the chassis. The term "mounted to the chassis" as used herein, includes directed and indirectly mounted to the chassis. In some embodiments the second conveyor, or the frame of the second conveyor may be directly connected to the chassis. Alternatively in some embodiments the second conveyor or the frame of the second conveyor may be indirectly connected to the chassis, for example, connected via struts, a revolute joint or a rotating shaft for example. Having the second conveyor mounted to the chassis of the mobile aggregate processing apparatus may assist in moving of the processed aggregate and in transportation of the second conveyor of the mobile aggregate processing apparatus. In particular embodiments the second conveyor is pivotally mounted to the chassis and is configured to rotate in relation to the chassis.

In some embodiments the second conveyor comprises a frame. Typically, and in some embodiments of the present invention the second conveyor comprises a structural frame that supports an endless conveyor belt wrapped around an at least, a first pulley and a second pulley.

In preferred embodiments the first conveyor and second conveyor are configured to be in series. By the term "in series" as used herein this term includes aligned in a row, such that aggregate from one conveyor may be transported to the other and transported on the second conveyor. This assists in the movement of the processed aggregate but may also assist in transportation of the apparatus.

In some embodiments, the mobile aggregate processing apparatus further comprises, a slider-crank linkage connecting the first conveyor and second conveyor.

In particular embodiments the mobile aggregate processing apparatus comprises a slider-crank linkage that, directly or indirectly, connects the frame of the first conveyor to the frame of the second conveyor. Advantageously this links the movement of the first conveyor and the second conveyor, so that the first conveyor and the second conveyor move in tandem. This linked movement includes where the second conveyor rotates and the first conveyor slides.

In particular embodiments the slider-crank linkage comprises a revolute joint for connecting the slider-crank linkage to the first conveyor, or the frame of the first conveyor. In particular embodiments the slider-crank linkage comprises a revolute joint for connecting the slider-crank linkage to the second conveyor, or the frame of the second conveyor.

In some embodiments the second conveyor is an incline conveyor. In some embodiments the second conveyor is configured to rotate about an axis. In particular embodiments the second conveyor comprises a rotating shaft at the axis of rotation with the chassis. Advantageously, having the second conveyor an incline conveyor may enable aggregate to be raised before dispensing off the conveyor and thus able to pile the aggregate. The second conveyor being able to incline also helps position the conveyor, and may also assist for transportation. In particular embodiments the axis for rotation of the second conveyor is a point of attachment of the second conveyor to the chassis.

In some embodiments the slider-crank linkage comprises a crank arm. In particular embodiments the slider-crank linkage comprises at least one connector rod connecting the crank arm to the frame of the first conveyor. In particular embodiments the slider-crank linkage comprises two connector rods. In particular embodiments the two connector rods comprise a body with two ends wherein one end of each connector rod is connected by a revolute joint. In embodiments where there is more than two connecting rods these may also be connected to each other by for example, revolute joints. In some embodiments the slider-crank comprises revolute joints. In particular embodiments the connecting rod and crank arm are connected to each other by a revolute joint. In particular embodiments the slider-crank linkage comprises two connector rods connecting the crank arm to the frame of the first conveyor. The slider-crank arrangement enables rotational movement of the second conveyor to correspond to the sliding movement of the primary conveyor. This may work the other way too, in that sliding movement of the primary conveyor may translate to rotational movement of the second conveyor.

In some embodiments where the slider-crank linkage comprises two or more connecting rods the length of the two or more connecting rods may be equal in length, or in some alternative embodiments the length of the two or more connecting rods are not equal in length. The overall length of connecting rods is one factor that determines how far apart the first conveyor is from the second conveyor. Thus a particular length of connecting rod may be chosen for a desired positioning, and distance apart, of the first and second conveyors.

The distance between the crank's pivot point and the joining point of connecting rod on the crack arm is called the crank radius or crank throw. The size of the crank radius defines the sliding stroke length. The size of the crank radius is also one factor that determines how far apart the first conveyor and the second conveyor are apart. The sliding stroke is the minimum and maximum positions that the sliding member, or first conveyor, can move or slide along its line of travel. Again a particular length of crank radius or crank throw may be chosen to give the desired minimum and maximum positions of the primary conveyor, in relation to the second conveyor or simply the chassis.

In some embodiments the crank arm projects, directly or indirectly, from the second conveyor, or the frame of the second conveyor. In some embodiments the crank arm projects, directly or indirectly, projects from the second conveyor or the frame of the second conveyor, such that rotating movement of the second conveyor causes the frame of the first conveyor to slide. In some embodiments the crank arm of the slider-crank linkage projects perpendicularly from the frame of the second conveyor. In some embodiments the crank arm projects perpendicular from the rotating axis of the second conveyor. In some embodiments the crank arm projects perpendicular from a, or the, rotating shaft of the second conveyor. In other embodiments the crank shaft may project perpendicular from another features of the second conveyor that corresponds in movement to the rotational movement of the second conveyor. It is the rotation of the crank arm that assists in translating the rotational movement of the second conveyor to the sliding movement of the primary conveyor.

In some embodiments the mobile aggregate processing apparatus further comprises two connected struts configured to slide relative to one another, along the direction of their longitudinal lengths. In some embodiments, the two connected struts are connected and configured such that the two connected struts can only slide relative to each other along the direction of their longitudinal lengths. In particular embodiments the two connected struts comprise two telescopic struts. In some embodiments the two connected struts configured to slide relative to each other comprise tubular struts. The two telescopic struts may comprise two tubular struts configured that one strut can slide within the other strut. Ideally, each of the two connected struts comprise an elongated body with two ends. In some embodiments one end of a first strut of the two connected struts is connected to the second conveyor, or the frame of the second conveyor, by a revolute joint. In some embodiments one end of the second strut of the two connected struts is connected to the chassis, by a revolute joint.

In particular embodiments the mobile aggregate processing plants comprising two connected struts configured to slide relative to one another along the direction of their longitudinal lengths, and wherein each of the two connected struts comprise an elongated body with two ends, wherein one end of a first strut of the two connected struts is connected to the second conveyor, or a frame of the second conveyor, and one end of a second strut of the two connected struts is connected to the chassis.

In some embodiments the outer sliding strut of the two connected telescopic struts is connected to the second conveyor or the frame of the second conveyor by a revolute joint. In some embodiments the inner sliding strut of the two connected telescopic struts is connected to the chassis by a revolute joint. In alternative embodiments this may be the other way around, the inner sliding strut of the two connected telescopic struts may be connected to the chassis and the outer sliding strut of the two connected telescopic struts may be connected to the second conveyor.

In some embodiments the crank arm of the slider-crank linkage projects from one strut of the two connected struts. In some embodiments the crank arm of the slider-crank linkage projects perpendicularly from one strut of the two connected struts. In particular embodiments the crank arm of the slider-crank linkage projects from the one strut of the two connecting struts that is connected to the chassis. In particular embodiments the crank arm of the slider-crank linkage projects from the inner sliding strut of the two connecting struts. In particular embodiments the crank arm of the slider-crank linkage projects from the outer sliding strut of the two connecting struts. Having the crank arm projecting from one of the two connecting struts enables the rotational movement of the second conveyor to be translated to the sliding movement of the first conveyor as the two connected struts are also rotating. Advantageously having the slider-crank linkage attached to one of the two connected struts enables a more compact arrangement, saving space and length of rods to be used. This arrangement also means that only one hydraulic mechanism can enable the movement of both the first conveyor and the second conveyor.

The slider-crank linkage may be positioned at various positions provided it is able to translate the sliding motion of the first or primary conveyor to the rotating motion of the second conveyor, or the other way around. Having the slider-crank linkage positioned at different positions gives the flexibility of having the pivot point at different places and the positioning of other elements of the mobile aggregate apparatus.

In some embodiments the slider-crank linkage is connected to a linking rod or strut. The linking rod, or strut, may be, for example, connected to the first conveyor, or the second conveyor or the chassis. This gives flexibility of design freedom.

Thus rotational movement of the second conveyor is possible, relative to the chassis. The rotational movement of the second conveyor is able to be translated to sliding movement of the first conveyor through the linkage of the crank arm of the slider-crank linkage. Having the two connecting struts to be the intermediate feature to translate the rotational movement of the second conveyor to the sliding movement of the firs conveyor, is beneficial in design as the conveyor belt may block direct connection between the frame of the first conveyor and the frame of the second conveyor. The features, configuration and design of the present invention may also easily enable hydraulic power to drive the motion.

In some embodiments the mobile aggregate processing apparatus comprises a hydraulic mechanism. The hydraulic mechanism may be configured to assist in the movement of the first conveyor or the second conveyor, or both the first conveyor and the second conveyor. The hydraulic mechanism may comprise two ends. In particular embodiments, one end of the hydraulic mechanism is connected to one slidable strut of the two connected slidable struts configured to slide along the direction of their longitudinal lengths, and the other end of the hydraulic mechanism is connected to the other slidable strut, of the two connected slidable struts configured to slide along the direction of their longitudinal lengths. In particular embodiments this may be wherein one end of the hydraulic mechanism is connected to the outer telescopic strut and the other end of the hydraulic mechanism is connected to the inner telescopic strut. In some embodiments the hydraulic mechanism is a hydraulic cylinder. In some embodiments the hydraulic mechanism comprises a bore end and an extendable piston rod end.

In some embodiments the mobile aggregate processing apparatus comprises, two hydraulic mechanisms. Ideally wherein the two hydraulic mechanisms are positioned one on either side of the conveyors.

In some embodiments the mobile aggregate processing apparatus comprises, two slider-crank linkages. Ideally wherein the two slider-crank linkages are positioned one on either side of the conveyors.

In some embodiments the mobile aggregate processing apparatus comprises, two sets of two connected struts configured to slide relative to one another, along the direction of their longitudinal lengths. Ideally wherein the two sets of two connected struts configured to slide relative to one another along the direction of their longitudinal lengths are positioned one on either side of the conveyors.

In some embodiments the second conveyor comprises a foldable conveyor. Having the second conveyor a foldable conveyor assists in transportation of the mobile aggregate processing apparatus. In some embodiments the foldable embodiment has two or more sections. In some embodiments the foldable conveyor comprises two frames, wherein the two frames are hinged together and configured to enable at least one of the two frames to pivot in relation to the other. Where the second conveyor is a foldable conveyor this may present more difficulties in setting up the correct working position relative to the first conveyor, from a folding position when transporting. Advantageously the configuration of the present invention helps to easily position the first and second conveyors in a working position.

The slider-crank linkage is configured to enable corresponding and simultaneous movement between the first conveyor and the second conveyor. In some embodiments, the slider-crank linkage is configured to enable the rotational movement, of the second conveyor about the axis at a point of connection with the chassis, to be a corresponding and simultaneous movement with the sliding movement of the first conveyor along the longitudinal length of the first conveyor. Such that as the second conveyor rotates in a direction from the chassis -creating a lower incline from the first conveyor, the first conveyor is slid along in the direction towards the second conveyor. This may work the other way around too. As the second conveyor is rotated towards the chassis - creating a larger incline, the first conveyor is slid in a direction away from the second conveyor.

In some embodiments the second conveyor comprises an incline conveyor; or comprises a foldable conveyor; or comprises both an incline conveyor and a foldable conveyor. In some embodiments the second conveyor comprises a stockpiling conveyor.

In particular embodiments the first conveyor comprises a transfer conveyor. In particular embodiments the transfer conveyor comprises an endless conveyor belt comprising a horizontal plane.

In some embodiments the slider-crank linkage comprises an offset slider-crank linkage. Advantageously this may allow a simple construction of a connection to give a smooth transfer of motion.

In some embodiments the slider crank-linkage comprises an inline slider-crank linkage. Advantageously this may enable a slider-crank linkage for complex shaped mobile aggregate processing apparatuses, for example wherein there is a foldable incline conveyor.

In some embodiments the mobile aggregate processing apparatus wherein comprises: a shredder; or, a grading screen; or both a shredder and grading screen. The shredder of the mobile aggregate processing apparatus may be an industrial shredder. In particular embodiments the mobile aggregate processing apparatus comprises a rock crusher.

In some embodiments the mobile aggregate processing apparatus comprises one or more of: wheels; continuous tracks; or both one or more of wheels and continuous tracks. In some embodiments the mobile aggregate processing apparatus comprises an engine. Optionally the engine may drive the one or more wheels; or continuous tracks; or both the one or more wheels and continuous track.

There is provided a method of using a mobile aggregate processing apparatus, comprising the step of:
- providing a mobile aggregate processing apparatus as herein described.

There is provided a method of re-positioning a first conveyor relative to a second conveyor in a mobile aggregate processing apparatus having first and second conveyors, comprising the steps of:
- providing a slider-crank linkage between the first conveyor and a second conveyor;
- operating the slider-crank linkage to change the angle between the first conveyor and the second conveyor, and to slide the first conveyor relative to the second conveyor.

According to the present invention there is provided a method of re-positioning a first conveyor relative to a second conveyor in a mobile aggregate processing apparatus having first and second conveyors, wherein the first conveyor is slidably mounted, between a first position and a second position, to the chassis of the mobile aggregate processing apparatus and the second conveyor comprises an incline conveyor able to rotate about an axis relative to the chassis, comprising the steps of:
- providing a slider-crank linkage between the first conveyor and the second conveyor;
- operating the slider-crank linkage to change the angle between the first conveyor and the second conveyor, and to slide the first conveyor relative to the second conveyor.

In some embodiments of repositioning a first conveyor relative to a second conveyor there further comprises the step of:
- connecting, directly or indirectly, the slider-crank linkage between the first conveyor and the second conveyor, wherein the second conveyor comprises an incline conveyor connected to the chassis; and wherein the slider-crank linkage is configured such that rotational movement of the second conveyor slidably moves the first conveyor; or configured such that slidably moving the first conveyor rotates the second conveyor.

In some embodiments the first conveyor; or second conveyor; or slider-crack; or any combination of first conveyor, second conveyor or slider-crack; can be connected to the chassis at more than one point of connection. In some embodiments the connecting point of the first conveyor; or second conveyor; or slider-crack comprises the pivoting point of the sliding-crank.

In some embodiments of the method of repositioning a first conveyor relative to a second conveyor, there comprises the further step of:
- connecting, directly or indirectly, two connected rods configured to slide relative to one another along their longitudinal lengths, wherein one rod of the two connecting rods is connected to the slider-crank linkage, and the other rod of the two connected rods is connected to the first conveyor, or the second conveyor, such that slidably moving the first conveyor rotates the second conveyor, or rotating the second conveyor slides the first conveyor.

Z There is provided a method of manufacturing a mobile aggregate processing apparatus, comprising the step of:
- slidably mounting a first conveyor onto a chassis of a mobile aggregate processing apparatus.

In some embodiments the methods of the present invention further comprise the step of:
- connecting, directly or indirectly, a slider-crank linkage between the first conveyor and a second conveyor, wherein the second conveyor comprises an incline conveyor connected to the chassis; and wherein the slider-crank linkage is configured such that rotational movement of the second conveyor slidably moves the first conveyor; or slidably moving the first conveyor rotates the second conveyor.

In some manufacturing embodiments the method of manufacturing a mobile aggregate further comprises the step of:
- connecting two connected struts, configured to slide relative to each other along the direction of their longitudinal lengths, the two connected struts each comprising a body with two ends; wherein one end of a first strut of the two connected struts is connected to the frame of the second conveyor by a revolute joint, and one end of a second strut of the two connected struts is connected to the chassis.

In general terms to help understanding, according to an embodiment of the invention there is provided a primary conveyor comprising of a structural frame, an endless conveyor belt wrapped around a head pulley and a tail pulley. The head pulley is located at the discharge end and the tail pulley located at the infeed end. The primary conveyor is free to move back and forth along a line of travel, supported by guide wheels.

In some embodiments there is also provided a foldable incline conveyor comprising of two structural frames hinged together and which can move relatively to each other, an endless conveyor belt wrapped around a head pulley and tail pulley. The belt is tensioned between said pulleys when the conveyor sections are in the extended working position. The tail pulley is located at the lower end next to the primary discharge end; referred to as the tail section. The head pulley is located at the upper end; referred to as the head section. The incline conveyor is free to rotate about an axis or centre of rotation. This axis is also the point at which the incline conveyor is fixed to the mobile aggregate processing apparatus.

In some embodiments, there is provided two telescopic struts consisting of two tubular sections configured to slide into one another, and a hydraulically operated cylinder. A crank arm of a slider-crank linkage is connected to the inner sliding section, of the two telescopic struts, is linked to a primary conveyor via a connecting rod. The crank arm may project from the inner sliding section of the two telescopic struts.

The telescopic struts have two purposes; one is to moving the incline conveyor about its centre of rotation to raise or lower the conveyor's angle of incline, the other is to move the primary conveyor back or forth along its line of travel. The slider-crank allow both these movements to happen simultaneously.

By the term "chassis" as used herein this term is used to describe the base structural frame of a mobile vehicle.

By the term "connecting" and the like terms, as used herein this term, and the like, are used to include both directly connecting and indirectly connecting.

By the term "inline slider-crank linkage" as used herein this term is used to describe a slider-crank linkage wherein the hinge point line of travel on the sliding joint member passes through the crank's pivot point.

By the term "longitudinal direction of the conveyor" and the like terms, as used herein this term is used to describe the back and forth direction parallel to the transporting direction of the conveyor. It includes where the conveyor is wider in distance than it is long in the transporting direction.

By the term "mounted" and the like terms, as used herein, this term, and the like, are used to include both directly mounted and indirectly mounted.

By the term "offset slider-crank linkage' as used herein this is used to describe a slider-crank linkage wherein the sliding joint line of travel does not passes through the crank's pivot point.

By the term "revolute joint" as used herein, and the like, are also known as hinge joints and pin joints, are used to refer to joints that are a one degree of freedom kinetic pair; the revolute joint constrains the motion of the two bodies to pure rotation along a common axis.

By the term "slider-crank linkage" as used herein this term is used to refer to a link mechanism with revolute joints and one prismatic or sliding joint, or a mechanism able to at least, convert the rotation of one item, for example, a crank to the sliding motion of another item: or the other way to convert the sliding motion of one item to the rotation movement of a another item, for example, a crank. Usually these would have 4 link mechanisms, 3 revolute joints and one sliding joint. Usually there is a crank arm.

The mobile aggregate processing apparatus may comprise other features not listed here but known to those skilled in the art, and may include, for example, one or more of: a hopper, a shredding chamber, an engine compartment, an engine, wheels, or a shredder.

### BRIEF DESCRIPTION OF THE DRAWINGS

The invention will be more clearly understood by the following descriptions of some embodiments thereof, given by way of example only, and with reference to accompanying drawings, in which:
Figure. 1 is a perspective view of a mobile aggregate processing apparatus, specifically, in this embodiment, a mobile industrial shredder;
Figure 2a is a partial perspective view of the mobile aggregate processing apparatus, of Figure 1, showing a series of conveyors in connection with the presented invention;
Figure 2b is a partial perspective view of the mobile aggregate processing apparatus showing the conveyor guide wheel in connection with the present invention; Figure 2c is an enlarged perspective view of a conveyor guide wheel;
Figure 3 is another perspective view showing a series of conveyors in connection with the present invention;
Figure 3a is an enlarged detailed perspective view of a slider-crank linkage in connection with an embodiment of the presented invention;
Figure 3b is an enlarged detailed perspective view of a telescopic strut in connection with an embodiment of the present invention;
Figure 4 is an illustration showing the conveyors according to an embodiment of the invention, with the conveyors in their normal working position;
Figure 5 is an illustration showing the conveyors according to an embodiment of the invention, with the incline conveyor at its maximum inclination;
Figure 6 is an illustration showing the angular movement of the telescopic struts of this embodiment;
Figure 7 illustrates a slider-crank stroke of an embodiment;
Figures 8a, 8b, 8c and 8d are illustrations showing the conveyors' movement as they foldup for transportation or storage;
Figures 9a, 9b, 9c and 9d are an illustration showing the conveyors' movement as they unfold into their working position.
Figures 10a and 10b illustrates an embodiment of an off-set slider-crank linkage; and,
Figures 11a, 11b and 11c illustrate slider-crank linkages at different positions, in different embodiments.

### DETAIL DESCRIPTION OF PREFERRED EMBODIMENTS

The present invention details a slider-crank linkage that connect the incline conveyor to the primary conveyor. This linkage ensures that the both conveyors move in tandem with each other.

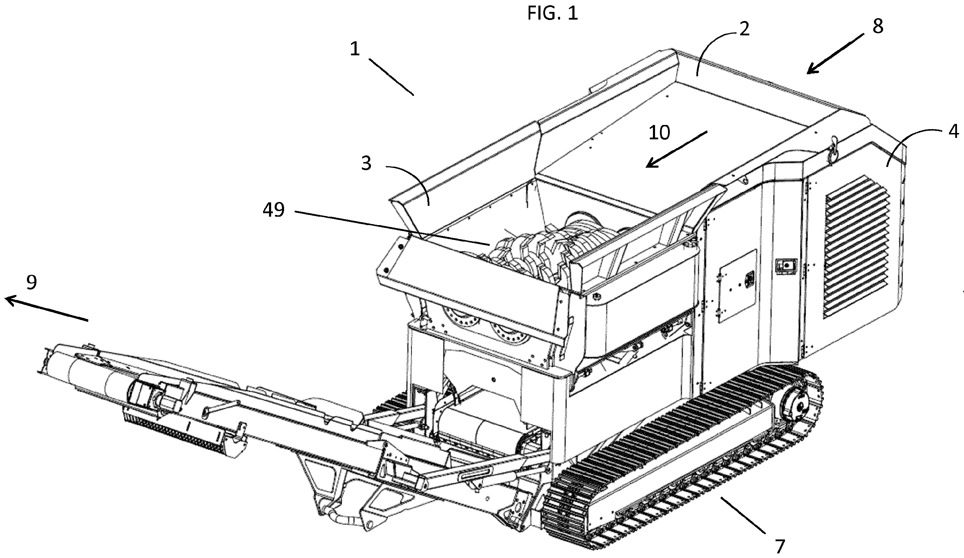

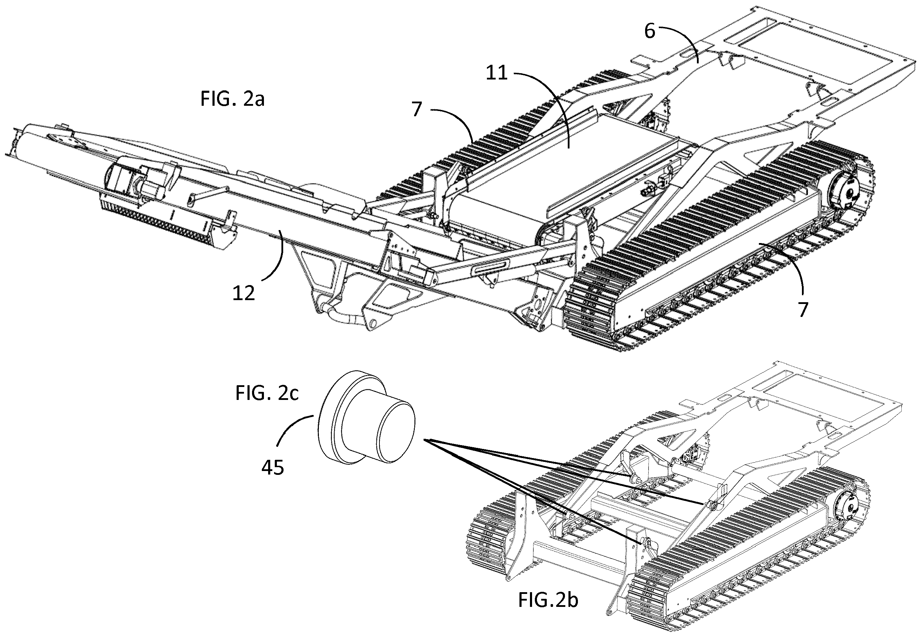

Referring to the drawings, FIG. 1 shows an example of a mobile aggregate processing apparatus (1) in connection with an embodiment of the present invention. FIG. 2 is a partial view of the same apparatus (1) of Figure 1 showing a series of conveyors. The apparatus (1) comprises of a hopper (2), a shredding chamber (3), an engine compartment (4), an incline conveyor (12) a primary collection conveyor (11) and a chassis frame (6) shown in Figure 2b and 2c, which in this case is mounted on two tracks (7) so as to enable mobility.

Mobile aggregate processing apparatus (1) generally has a feed or input end (8), and discharge or outlet end or ends (9). The direction in which the aggregate moves from the feed end to the discharge end is referred to as aggregate flow or the direction of aggregate flow (10) as indicated by the direction of the arrow 10.

FIG. 2a is a cut away perspective view showing the guide wheels (45) which supports the first or primary conveyor (11) on the chassis (6), of the mobile aggregate processing apparatus, when the primary conveyor (11) is slidably mounted onto the chassis (6). The guide wheels (45) enable easy sliding motion of the primary conveyor in a back and forth direction, horizontal direction along the line of travel of the aggregate being processed.

FIG. 2b is a partial perspective view of the mobile aggregate processing apparatus showing four guide wheels (45). These guide wheels (45) support and guide the primary conveyor (11) as it moves back and forth along its line of travel (39).

Figure 2c shows an enlarged guide wheel (45).

Optionally the primary conveyor (11) supports consist of more or less guide wheels (45), or sliding pads, guide rails or skids.

Optionally the primary conveyor (11) supports consist of a combination of guide wheel (45), slide pads, guide rails or skids.

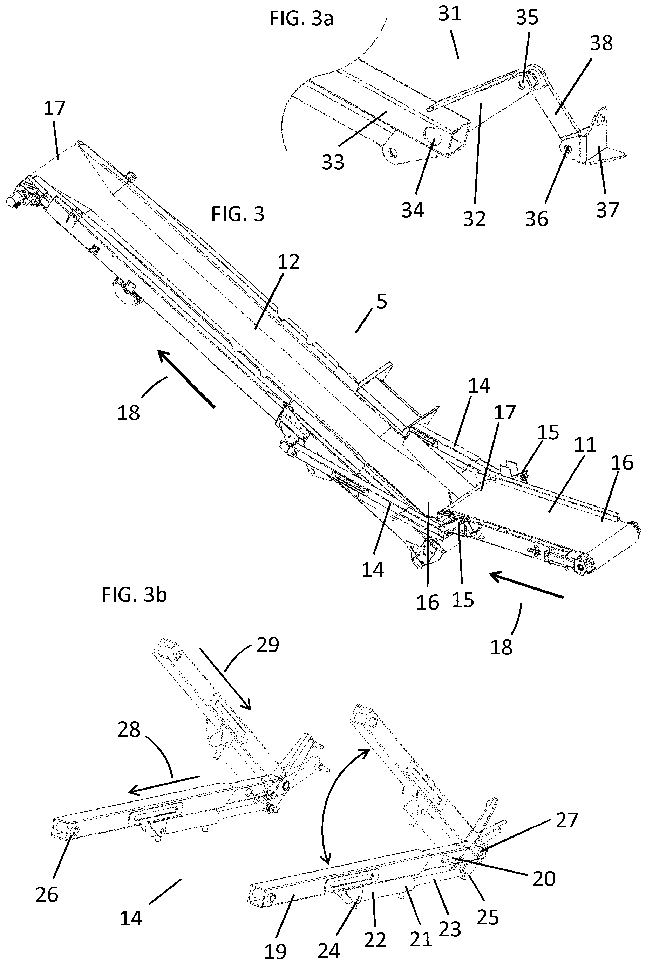

FIG. 3 illustrates a series of conveyors (5) comprising of an internal collection conveyor which may be referred to as the first or primary conveyor (11), an external inclined stockpiling conveyor (12) or second conveyor, two telescopic struts (14) and two slider-crank linkage (15). In this embodiment the two telescopic struts (14) and the two slider-crank linkage (15) are positioned on either side of the conveyors in the normal orientation of use.

The conveyors also comprise of an input or feed end (16), and discharge or output end (17). The direction in which the aggregate is conveyed is referred to as the aggregate flow or the direction of aggregate flow (18), as shown by the pointed direction of arrow (18).

FIG. 3b is a detailed illustration of the telescopic struts (14), each consisting of an outer tubular section (19), an inner sliding section (20), and a hydraulically operated cylinder (21). The hydraulic cylinder (21) consists of a bore end (22) and an extendable piston rod end (23). One end of the hydraulic cylinder is connected to the outer telescopic section (19) at a joint (24) and the other end is connected to the inner telescopic section (20) at a joint (25). The hydraulic cylinder (21) provides the power to extend (28), the direction of which is shown by the pointed direction of the arrow (28), or retract (29), the direction of which is shown by the pointed direction of the arrow (29), the telescopic strut (14).

In this embodiment, one end of the telescopic strut (26) is hinged to the incline conveyor (12) while the other end (27) is hinged to the chassis frame (6). The telescopic struts (14) are free to rotate about these revolute or hinged joints (26, 27) as it extends (28) or retracts (29), as illustrated by FIG. 3b. Extending (28) the telescopic struts (14) will lower (30) the incline conveyor (12). Retracting the telescoping struts (29) will raise (31) the incline conveyor (12). Both the incline conveyor (12) and the telescopic struts (14) will rotate relative to each other.

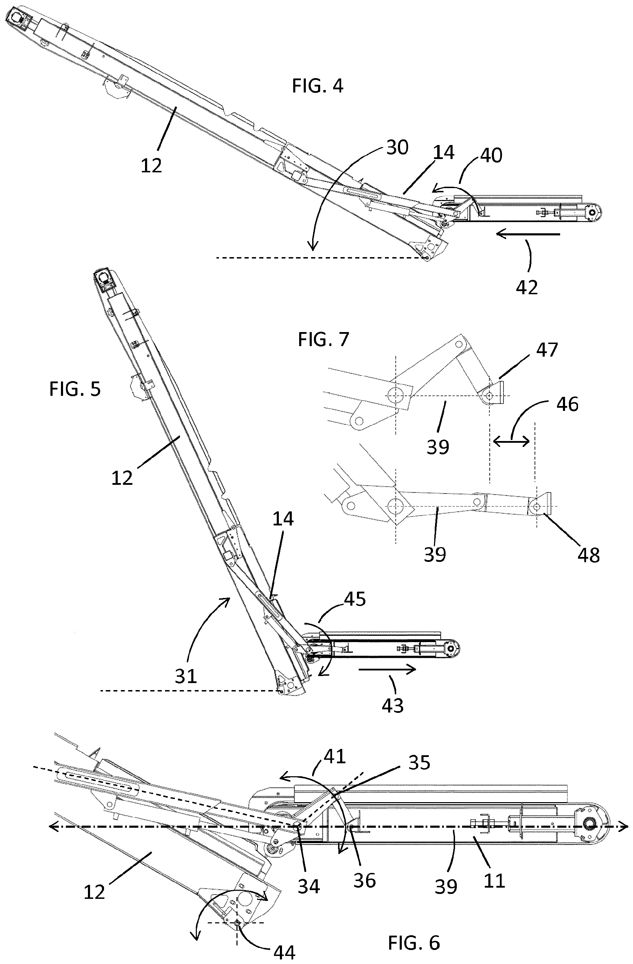

FIG. 3a is an illustration of a slider-crank linkage (31) in connection with the present invention. A slider-crank linkage (31) is a mechanism which converts rotary motion into linear motion. In this embodiment, the slider-crank linkage comprises, a crank arm (32) which is more or less at a right angle to a rotating shaft (33); three revolute joints (34, 35, and 36); one sliding member (37); and one or more connecting rods (38) linking the crank arm (32) to the sliding member (37). The sliding member (37) in this embodiment may be the primary conveyor (11), or an attachment joint to the primary conveyor (11). In this embodiment the rotating shaft (33) may be the telescopic strut (20). The particular type of slider-crank linkage (31) used in connection with this embodiment of the present invention is referred to as an 'inline slider-crank'. This is due to the fact that the hinge point (36) line of travel (39) on the slinging member (37) passes through the crank's pivot point (34). The distance between crank's pivot point (34) and the connecting rod journal (35) is called the crank radius or crank throw (41). The size of the crank radius (41) defines the sliding stroke (46). The sliding stroke (46) is the minimum (47) and maximum (48) position that the sliding member (37) can move along its line of travel (39), as illustrated by FIG. 7.

Lowering (30) the incline conveyor (12) will rotate (40) the crank arms (32) in the same direction as illustrated by FIG. 4 by the direction of the pointed arrows (30) and (40) respectively. As the crank arms (32) rotates (41) (seen in Figure 6) the connecting rods (38) will pull the primary conveyor (11) along its line of travel (42) the direction of which is as indicated by the pointed direction of the arrow (42).

Raising (31) the incline conveyor (12) will rotate the crank arms (32) the same direction (45) as illustrated by FIG. 5 and 6, by the direction of the pointed arrows (31) and (45) respectively. As the crank arms (32) rotates (41) the connecting rods (38) will push the primary conveyor (11) back along its line of travel (43).

Optionally, the crank arms (32) may be fitted directly to the incline conveyor (12), or the frame of the incline or second conveyor (12), for example. This may be advantageous to ensure that the crank arms rotates on incline conveyor's centre of rotating (44), rather than having the crank arms' (32) centre of rotation as the telescopic pivot points (27).

Optionally the telescopic struts may be fitted vice versa as opposed to how it shown in illustrations provided, for example the crack arm (32) may be connected to the outer telescopic strut.

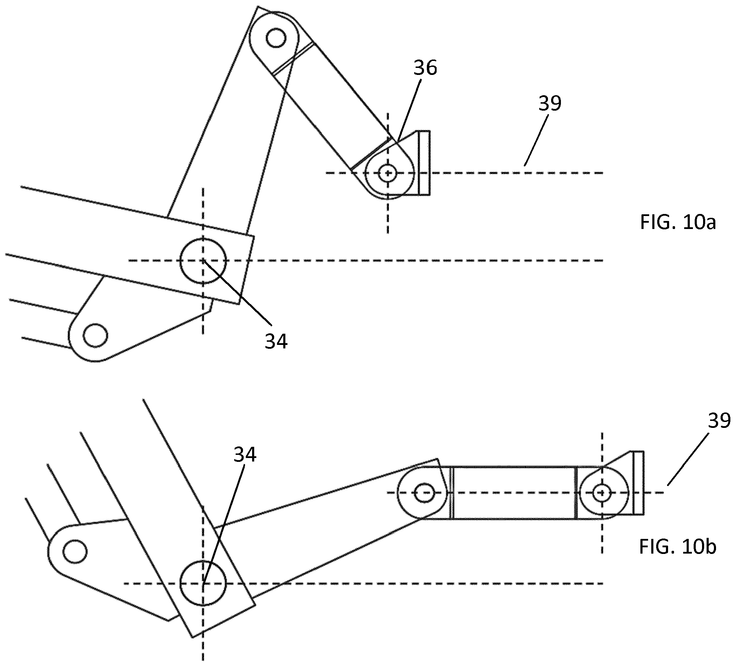

Optionally the slider-cranks (31) can be offset as illustrated in Figures 10a and 10b. An `offset slider-crank linkage' is defined by the fact that the sliding joint (36) line of travel (39) does not passes through the crank's pivot point (34).

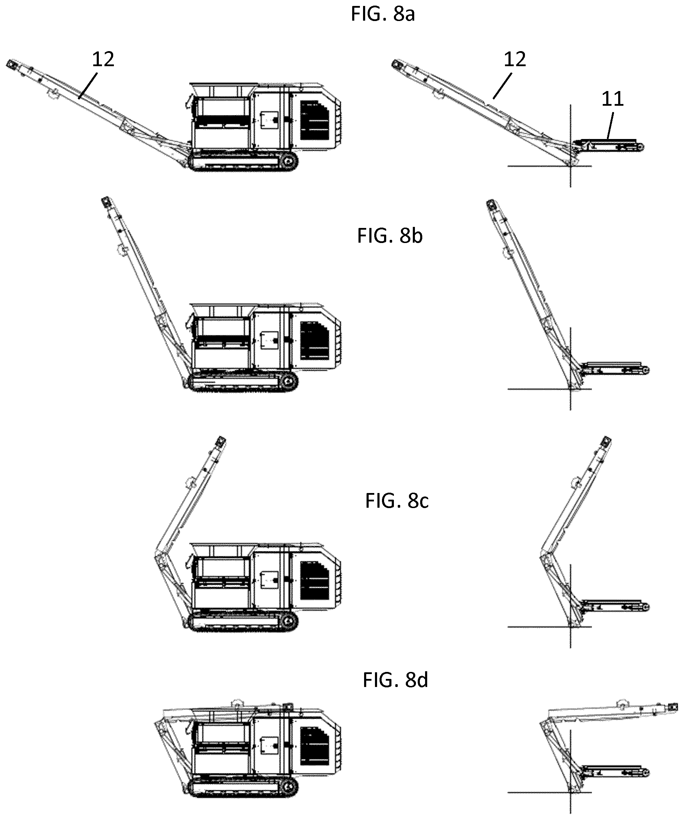

Figure 8 shows a number of positions (Fig. 8a, 8b, 8c, 8d) of a second conveyor or an external incline foldable conveyor (12) for various positions, for possible use (Fig. 8a), transport (Fig. 8d) and between (Fig. 8b, 8c) use and transportation. The figures on the left of Fig. 8a, 8b, 8c, 8d show the external incline foldable conveyor (12) in relation to the intact mobile aggregate processing apparatus, and the right-side figures show a cut away view of the mobile aggregate processing apparatus showing only the primary or first conveyor (11) and the second or incline conveyor (12). The serious of figures starts off with what may be a typical position of the second conveyor or incline conveyor (12) in use, Fig 8a. As the incline or second conveyor (12) is raised the primary or first conveyor (11) is moved back, slide backwards in a direction away from the second of incline conveyor (12). Fig 8d shows a typical position of the second conveyor (12) for transportation.

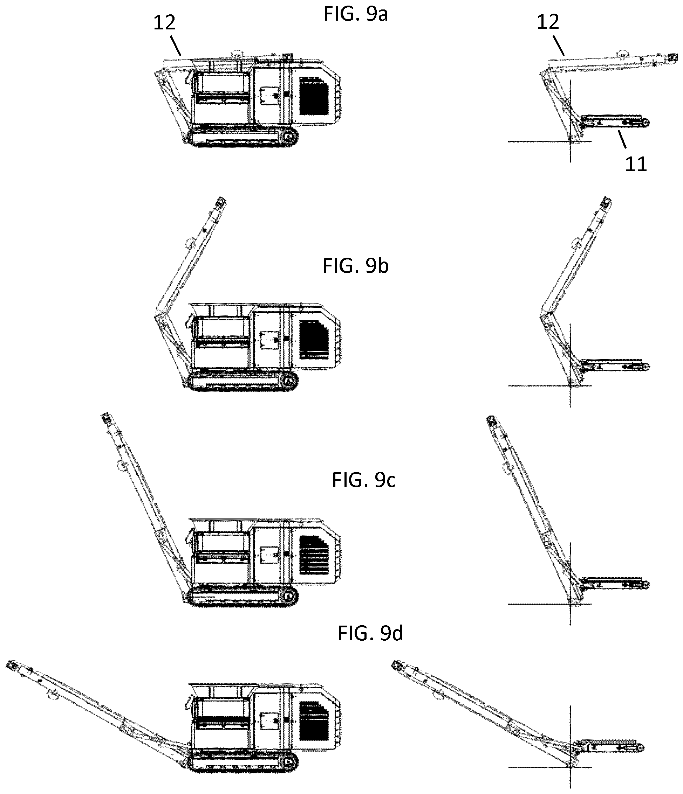

Figure 9 shows a number of positions (Fig. 9 a, 9b, 9c, 9d) of an external incline foldable conveyor (12) for various positions, for possible use (Fig. 9d), transport (Fig. 9a) and between (Fig. 9b, 9c) use and transportation. The figures on the left of Fig. 9a, 9b, 9c, 9d show the external incline foldable conveyor, or second conveyor (12) in relation to the intact mobile aggregate processing apparatus (1), and the right-side figures show a cut away view of the mobile aggregate processing apparatus showing only the primary or first conveyor (11) and the second or incline conveyor (12). The serious of drawings starts off with what may be a typical position of the second conveyor or incline conveyor (12) in transport, with the foldable conveyor (12) folded. As the incline or second conveyor (12) is lowered the primary or first conveyor (11) is moved, slid, towards the second conveyor (12), in a direction towards the second or incline conveyor (12).

The present invention in particular provides mobile aggregate processing apparatus and methods involving a slider-crank linkage that, directly or indirectly, connects the frame of a first conveyor to the frame of a second conveyor. Advantageously this links the movement of the first conveyor and the second conveyor, so that the first conveyor and the second conveyor move in tandem. This linked movement includes where the second conveyor rotates and the first conveyor slides, so as to ensure a more optimal efficient position before processing, with improved flow of material or aggregate at the transfer point, thus decreasing issues such as material spillages, blockages, increased levels of dust and excessive wear.

The positioning of the slider-crank linkage may be in various positions provided it can still link the movement of the first or primary conveyor (11) to the second conveyor (12), transforming a sliding motion to a rotation motion or rotating motion to a sliding motion.

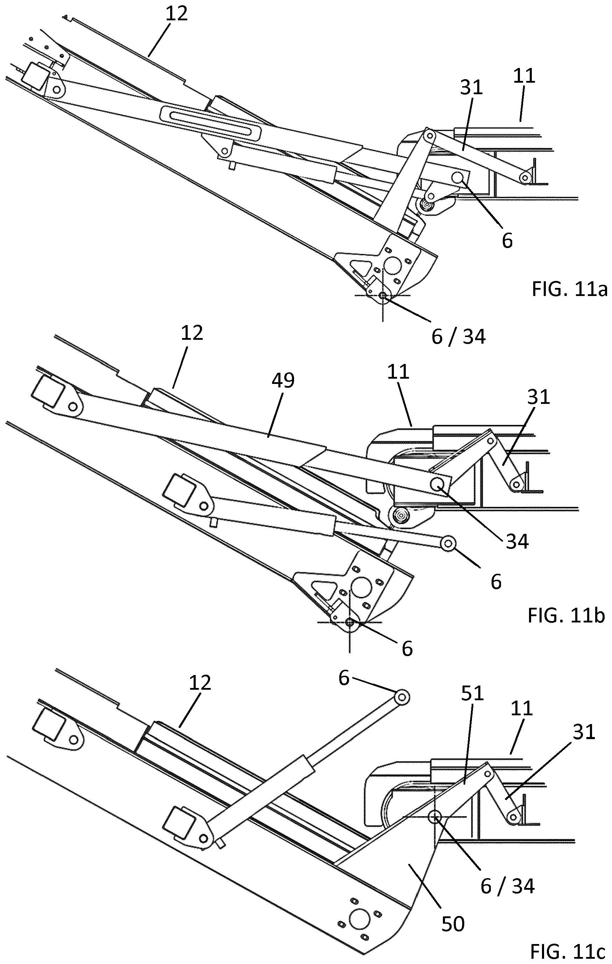

Figure 11a illustrates another embodiment of the present invention wherein the slider-crank linkage (31) is not directly connected to the two connected sliding struts but is directly connected to the first conveyor (11) and the second conveyor (12).

Figure 11b illustrates another embodiment of the present invention wherein the slider-crank linkage (31), with pivot point (34) is connected to a separate strut (49) connected to the second conveyor (12). This separate strut (49) is independent of the strut that connects the second conveyor (12) to the chassis (6). In this embodiment the separate strut (49) comprises two telescopic struts connecting the second conveyor (12) to the slider-crank linkage.

Figure 11c illustrates another embodiment of the present invention wherein the slider-crank linkage (31) is connected to the second conveyor (12) directly via a rod (50) wherein the rod (50) comprises an extended portion from the crank shaft (51) on the opposing side of the rotating axis, or pivot point (34) of the slider-crank linkage. In this embodiment the pivot point for the crank (34) is the same point as an attachment point to the chassis (6).

## Claims

1. A mobile aggregate processing apparatus comprising:
- a chassis (6);
- a first conveyor (11), wherein the first conveyor (11) is slidably mounted, between a first position and second position, to the chassis (6)
- a second conveyor (12), wherein the second conveyor (12) is pivotally mounted to the chassis (6), and wherein the second conveyor (12) comprises an incline conveyor (12) able to rotate (40) about an axis relative to the chassis (6); and,
- a slider-crank linkage, wherein the slider-crank linkage connects, directly or indirectly, the first conveyor (11) and second conveyor (12).

2. A mobile aggregate processing apparatus as claimed in claim 1 wherein the chassis (6) comprises one or more support guides configured to mount, the first conveyor (11), or a frame of the first conveyor (11); to the chassis (6); and enable the first conveyor (11) to slide relative to the chassis (6), along the direction (45) of longitudinal length of the conveyor.

3. A mobile aggregate processing apparatus as claimed in claim 2 wherein the one or more support guides comprises one or more of: tracks (7), rails, wheels, skids, or sliding pads.

4. A mobile aggregate processing apparatus as claimed in any preceding claim wherein the slider-crank linkage connecting the first conveyor (11) to the second conveyor (12), connects a frame of the first conveyor (11) to a frame of the second conveyor (12).

5. A mobile aggregate processing apparatus as claimed in any preceding claim wherein the second conveyor (12) comprises a foldable conveyor (12).

6. A mobile aggregate processing apparatus as claimed in any preceding claim further comprising two connected struts configured to slide relative to one another along the direction (45) of their longitudinal lengths, and wherein each of the two connected struts comprise an elongated body with two ends (9), wherein one end (27) of a first strut of the two connected struts is connected to the second conveyor (12), or a frame of the second conveyor (12), and one end (27) of a second strut of the two connected struts is connected to the chassis (6).

7. A mobile aggregate processing apparatus as claimed in claim 6 wherein the slider-crank linkage is connected to one strut of the two connected struts configured to slide relative to one another along their longitudinal lengths.

8. A mobile aggregate processing apparatus as claimed in claim 6 or 7 wherein the two connected strut are configured to slide relative to one another are telescopic struts (14) configured wherein one strut slides within the other.

9. A mobile aggregate processing apparatus as claimed in any preceding claim wherein the first conveyor (11) comprises a transfer conveyor.

10. A mobile aggregate processing apparatus as claimed in any preceding claim wherein the second conveyor (12) comprises a stockpiling conveyor.

11. A mobile aggregate processing apparatus as claimed in any preceding claim wherein further comprises: a shredder; or, a grading screen; or both a shredder and grading screen.

12. A mobile aggregate processing apparatus as claimed in any preceding claims wherein further comprises one or more of: wheels; continuous tracks (7); or both one or more wheels and continuous tracks (7).

13. A method of re-positioning a first conveyor (11) relative to a second conveyor (12) in a mobile aggregate processing apparatus having a first and a second conveyor (12), wherein the first conveyor (11) is slidably mounted, between a first position and a second position, to the chassis (6) of the mobile aggregate processing apparatus and the second conveyor (12) comprises an incline conveyor (12) able to rotate (40) about an axis relative to the chassis (6), comprising the steps of:
- providing a slider-crank linkage between the first conveyor (11) and the second conveyor (12);
- operating the slider-crank linkage to change the angle between
the first conveyor (11) and the second conveyor (12), and to slide
the first conveyor (11) relative to the second conveyor (12).

14. A method as claimed in claim 13 wherein further comprises the step of:
- connecting, directly or indirectly, the slider-crank linkage between the first conveyor (11) and the second conveyor (12), wherein the second conveyor (12) comprises an incline conveyor (12) connected to the chassis (6); and wherein the slider-crank linkage is configured such that rotational movement of the second conveyor (12) slidably moves the first conveyor (11); or configured such that slidably moving the first conveyor (11) rotates (41) the second conveyor (12).

15. A method as claimed in claim 13 or 14 wherein further comprises the step of:
- connecting, directly or indirectly, two connected rods configured to slide relative to one another along their longitudinal lengths, wherein one rod (50) of the two connecting rods (38) is connected to the slider-crank linkage, and the other rod (50) of the two connected rods is connected to the first conveyor (11), or the second conveyor (12), such that slidably moving the first conveyor (11) rotates (41) the second conveyor (12), or rotating (44) the second conveyor (12) slides the first conveyor (11).

## Patentansprüche

1. Eine mobile Aggregatverarbeitungsvorrichtung, die Folgendes beinhaltet:
- ein Chassis (6);
- einen ersten Förderer (11), wobei der erste Förderer (11) zwischen einer ersten Position und einer zweiten Position gleitbar an dem Chassis (6) befestigt ist
- einen zweiten Förderer (12), wobei der zweite Förderer (12) schwenkbar an dem Chassis (6) befestigt ist, und wobei der zweite Förderer (12) einen Neigungsförderer (12) beinhaltet, der sich um eine Achse relativ zu dem Chassis (6) drehen (40) kann; und
- ein Schubkurbelgetriebe, wobei das Schubkurbelgetriebe den ersten Förderer (11) und den zweiten Förderer (12) direkt oder indirekt verbindet.

2. Mobile Aggregatverarbeitungsvorrichtung gemäß Anspruch 1, wobei das Chassis (6) eine oder mehrere Stützführungen beinhaltet, die konfiguriert sind, um den ersten Förderer (11) oder einen Rahmen des ersten Förderers (11) an dem Chassis (6) zu befestigen und dem ersten Förderer (11) zu ermöglichen, relativ zu dem Chassis (6) entlang der Richtung (45) der longitudinalen Länge des Förderers zu gleiten.

3. Mobile Aggregatverarbeitungsvorrichtung gemäß Anspruch 2, wobei die eine oder die mehreren Stützführungen eines oder mehrere der Folgenden beinhalten: Spuren (7), Schienen, Räder, Gleitschienen oder Gleitplatten.

4. Mobile Aggregatverarbeitungsvorrichtung gemäß einem der vorhergehenden Ansprüche, wobei das Schubkurbelgetriebe den ersten Förderer (11) mit dem zweiten Förderer (12) verbindet, einen Rahmen des ersten Förderers (11) mit einem Rahmen des zweiten Förderers (12) verbindet.

5. Mobile Aggregatverarbeitungsvorrichtung gemäß einem der vorhergehenden Ansprüche, wobei der zweite Förderer (12) einen faltbaren Förderer (12) beinhaltet.

6. Mobile Aggregatverarbeitungsvorrichtung gemäß einem der vorhergehenden Ansprüche, die ferner zwei verbundene Streben beinhaltet, die konfiguriert sind, um entlang der Richtung (45) ihrer longitudinalen Längen relativ zueinander zu gleiten, und wobei jede der zwei verbundenen Streben einen verlängerten Körper mit zwei Enden (9) beinhaltet, wobei ein Ende (27) einer ersten Strebe der zwei verbundenen Streben mit dem zweiten Förderer (12) oder einem Rahmen des zweiten Förderers (12) verbunden ist und ein Ende (27) einer zweiten Strebe der zwei verbundenen Streben mit dem Chassis (6) verbunden ist.

7. Mobile Aggregatverarbeitungsvorrichtung gemäß Anspruch 6, wobei das Schubkurbelgetriebe mit einer Strebe der zwei verbundenen Streben verbunden ist, konfiguriert, um entlang ihren longitudinalen Längen relativ zueinander zu gleiten.

8. Mobile Aggregatverarbeitungsvorrichtung gemäß Anspruch 6 oder 7, wobei die zwei verbundenen Streben, konfiguriert, um relativ zueinander zu gleiten, teleskopische Streben (14) sind, und die teleskopischen Streben so konfiguriert sind, dass eine Strebe innerhalb der anderen gleitet.

9. Mobile Aggregatverarbeitungsvorrichtung gemäß einem der vorhergehenden Ansprüche, wobei der erste Förderer (11) einen Transferförderer beinhaltet.

10. Mobile Aggregatverarbeitungsvorrichtung gemäß einem der vorhergehenden Ansprüche, wobei der zweite Förderer (12) einen stapelnden Förderer beinhaltet.

11. Mobile Aggregatverarbeitungsvorrichtung gemäß einem der vorhergehenden Ansprüche, wobei diese ferner Folgendes beinhaltet: einen Shredder oder ein Klassiersieb oder sowohl einen Shredder als auch ein Klassiersieb.

12. Mobile Aggregatverarbeitungsvorrichtung gemäß einem der vorhergehenden Ansprüche, wobei diese ferner eines oder mehrere der Folgenden beinhaltet: Räder; kontinuierliche Spuren (7); oder sowohl ein oder mehrere Räder als auch kontinuierliche Spuren (7).

13. Ein Verfahren zum Repositionieren eines ersten Förderers (11) relativ zu einem zweiten Förderer (12) in einer mobilen Aggregatverarbeitungsvorrichtung mit einem ersten und einem zweiten Förderer (12), wobei der erste Förderer (11) zwischen einer ersten Position und einer zweiten Position gleitbar an dem Chassis (6) der mobilen Aggregatverarbeitungsvorrichtung befestigt ist und der zweite Förderer (12) einen Neigungsförderer (12) beinhaltet, der sich um eine Achse relativ zu dem Chassis (6) drehen (40) kann, das die folgenden Schritte beinhaltet:
- Bereitstellen eines Schubkurbelgetriebes zwischen dem ersten Förderer (11) und dem zweiten Förderer (12);
- Betreiben des Schubkurbelgetriebes, um den Winkel zwischen dem ersten Förderer (11) und dem zweiten Förderer (12) zu wechseln und den ersten Förderer (11) relativ zu dem zweiten Förderer (12) gleiten zu lassen.

14. Verfahren gemäß Anspruch 13, das ferner den folgenden Schritt beinhaltet:
- direktes oder indirektes Verbinden des Schubkurbelgetriebes zwischen dem ersten Förderer (11) und dem zweiten Förderer (12), wobei der zweite Förderer (12) einen Neigungsförderer (12) beinhaltet, der mit dem Chassis (6) verbunden ist; und wobei das Schubkurbelgetriebe so konfiguriert ist, dass der erste Förderer (11) durch eine Drehbewegung des zweiten Förderers (12) gleitbar bewegt wird, oder so konfiguriert ist, dass sich der zweite Förderer (12) durch die Gleitbewegung des ersten Förderers (11) dreht (41).

15. Verfahren gemäß Anspruch 13 oder 14, das ferner den folgenden Schritt beinhaltet:
- direktes oder indirektes Verbinden von zwei verbundenen Stäben, die konfiguriert sind, um entlang ihren longitudinalen Längen relativ zueinander zu gleiten, wobei ein Stab (50) der zwei verbindenden Stäbe (38) mit dem Schubkurbelgetriebe verbunden ist und der andere Stab (50) der zwei verbundenen Stäbe mit dem ersten Förderer (11) oder dem zweiten Förderer (12) verbunden ist, sodass sich der zweite Förderer (12) durch die Gleitbewegung des ersten Förderers (11) dreht oder der erste Förderer (11) durch das Drehen (44) des zweiten Förderers (12) gleitet.

## Revendications

1. Un appareil mobile de traitement d'agrégat comprenant :
- un châssis (6) ;
- un premier convoyeur (11), le premier convoyeur (11) étant monté coulissant, entre une première position et une deuxième position, sur le châssis (6)
- un deuxième convoyeur (12), le deuxième convoyeur (12) étant monté pivotant sur le châssis (6), et le deuxième convoyeur (12) comprenant un convoyeur incliné (12) apte à tourner (40) autour d'un axe par rapport au châssis (6) ; et,
- une liaison bielle-manivelle, la liaison bielle-manivelle raccordant, directement ou indirectement, le premier convoyeur (11) et le deuxième convoyeur (12).

2. Un appareil mobile de traitement d'agrégat tel que revendiqué dans la revendication 1 dans lequel le châssis (6) comprend un ou plusieurs guides de support configurés pour monter le premier convoyeur (11), ou un bâti du premier convoyeur (11), sur le châssis (6) ; et pour permettre au premier convoyeur (11) de coulisser par rapport au châssis (6), le long de la direction (45) de la longueur longitudinale du convoyeur.

3. Un appareil mobile de traitement d'agrégat tel que revendiqué dans la revendication 2 dans lequel les un ou plusieurs guides de support comprennent un ou plusieurs éléments parmi : des chenilles (7), des rails, des roues, des châssis mobiles, ou des patins de glissement.

4. Un appareil mobile de traitement d'agrégat tel que revendiqué dans n'importe quelle revendication précédente dans lequel la liaison bielle-manivelle raccordant le premier convoyeur (11) au deuxième convoyeur (12) raccorde un bâti du premier convoyeur (11) à un bâti du deuxième convoyeur (12).

5. Un appareil mobile de traitement d'agrégat tel que revendiqué dans n'importe quelle revendication précédente dans lequel le deuxième convoyeur (12) comprend un convoyeur pliable (12).

6. Un appareil mobile de traitement d'agrégat tel que revendiqué dans n'importe quelle revendication précédente comprenant en outre deux jambes de force raccordées configurées pour coulisser l'une par rapport à l'autre le long de la direction (45) de leurs longueurs longitudinales, et dans lequel chacune des deux jambes de force raccordées comprend un corps allongé avec deux extrémités (9), dans lequel une extrémité (27) d'une première jambe de force des deux jambes de force raccordées est raccordée au deuxième convoyeur (12), ou à un bâti du deuxième convoyeur (12), et une extrémité (27) d'une deuxième jambe de force des deux jambes de force raccordées est raccordée au châssis (6).

7. Un appareil mobile de traitement d'agrégat tel que revendiqué dans la revendication 6 dans lequel la liaison bielle-manivelle est raccordée à une jambe de force des deux jambes de force raccordées configurées pour coulisser l'une par rapport à l'autre le long de leurs longueurs longitudinales.

8. Un appareil mobile de traitement d'agrégat tel que revendiqué dans la revendication 6 ou la revendication 7 dans lequel les deux jambes de force raccordées configurées pour coulisser l'une par rapport à l'autre sont des jambes de force télescopiques (14) configurées de telle sorte qu'une jambe de force coulisse au sein de l'autre.

9. Un appareil mobile de traitement d'agrégat tel que revendiqué dans n'importe quelle revendication précédente dans lequel le premier convoyeur (11) comprend un convoyeur de transfert.

10. Un appareil mobile de traitement d'agrégat tel que revendiqué dans n'importe quelle revendication précédente dans lequel le deuxième convoyeur (12) comprend un convoyeur de stockage.

11. Un appareil mobile de traitement d'agrégat tel que revendiqué dans n'importe quelle revendication précédente, comprenant en outre : une déchiqueteuse ; ou un crible classeur ; ou à la fois une déchiqueteuse et un crible classeur.

12. Un appareil mobile de traitement d'agrégat tel que revendiqué dans n'importe quelles revendications précédentes, comprenant en outre un ou plusieurs éléments parmi : des roues ; des chenilles continues (7) ; ou à la fois une ou plusieurs roues et des chenilles continues (7).

13. Un procédé de repositionnement d'un premier convoyeur (11) par rapport à un deuxième convoyeur (12) dans un appareil mobile de traitement d'agrégat ayant un premier et un deuxième convoyeur (12), dans lequel le premier convoyeur (11) est monté coulissant, entre une première position et une deuxième position, sur le châssis (6) de l'appareil mobile de traitement d'agrégat et le deuxième convoyeur (12) comprend un convoyeur incliné (12) apte à tourner (40) autour d'un axe par rapport au châssis (6), comprenant les étapes consistant à :
- prévoir une liaison bielle-manivelle entre le premier convoyeur (11) et le deuxième convoyeur (12) ;
- faire fonctionner la liaison bielle-manivelle afin de modifier l'angle entre le premier convoyeur (11) et le deuxième convoyeur (12), et de faire coulisser le premier convoyeur (11) par rapport au deuxième convoyeur (12).

14. Un procédé tel que revendiqué dans la revendication 13 comprenant en outre l'étape consistant à :
- raccorder, directement ou indirectement, la liaison bielle-manivelle entre le premier convoyeur (11) et le deuxième convoyeur (12), dans lequel le deuxième convoyeur (12) comprend un convoyeur incliné (12) raccordé au châssis (6) ; et dans lequel la liaison bielle-manivelle est configurée de telle sorte qu'un mouvement de rotation du deuxième convoyeur (12) déplace de façon coulissante le premier convoyeur (11) ; ou configurée de telle sorte que le fait de déplacer de façon coulissante le premier convoyeur (11) fasse tourner (41) le deuxième convoyeur (12).

15. Un procédé tel que revendiqué dans la revendication 13 ou la revendication 14 comprenant en outre l'étape consistant à :
- raccorder, directement ou indirectement, deux tiges raccordées configurées pour coulisser l'une par rapport à l'autre le long de leurs longueurs longitudinales, dans lequel une tige (50) des deux tiges de raccordement (38) est raccordée à la liaison bielle-manivelle, et l'autre tige (50) des deux tiges raccordées est raccordée au premier convoyeur (11), ou au deuxième convoyeur (12), de telle sorte que le fait de déplacer de façon coulissante le premier convoyeur (11) fasse tourner (41) le deuxième convoyeur (12), ou que le fait de faire tourner (44) le deuxième convoyeur (12) fasse coulisser le premier convoyeur (11).
